# EUROPEAN PATENT APPLICATION

(11) **EP 3 758 109 A1**
(43) Date of publication of application: **30.12.2020**
(21) Application number: 20181647.7
(22) Date of filing: 23.06.2020
(51) Int. Cl.: H01M 4/13, H01M 4/136, H01M 4/139, H01M 4/1397, H01M 4/36, H01M 4/38, H01M 4/58, H01M 4/62, H01M 10/052

(54) **LITHIUM-SULFUR BATTERY CATHODE MATERIAL AND PREPARATION METHOD THEREOF, LITHIUM-SULFUR BATTERY CATHODE AND PREPARATION METHOD THEREOF, AND LITHIUM-SULFUR BATTERY**

(30) Priority: 26.06.2019 CN 201910559903
(71) Applicant: Chongqing University, Shapingba, Chongqing 400044 (CN)
(72) Inventor: Wei, Zidong, Shapingba, Chongqing (CN); Gan, Ruiyi, Shapingba, Chongqing (CN); Chen, Siguo, Shapingba, Chongqing (CN); Li, Cunpu, Shapingba, Chongqing (CN); Dong, Qin, Shapingba, Chongqing (CN); Fu, Na, Shapingba, Chongqing (CN)
(74) Representative: Charrier Rapp & Liebau

(57) **Abstract**

The present invention provides a lithium-sulfur battery cathode material and a preparation method thereof, a lithium-sulfur battery cathode and a preparation method thereof, and the lithium-sulfur battery, and belongs to the field of lithium-sulfur batteries. The lithium-sulfur battery cathode material provided by the present invention includes MXene and functional carbon cloth, where the MXene is attached to a fiber surface of the functional carbon cloth, the MXene includes metal carbide or metal nitride, and metal components in the metal carbide and the metal nitride independently include titanium, vanadium, chromium or molybdenum; and the surface of the functional carbon cloth contains hydroxyl and carboxyl functional groups. The lithium-sulfur battery provided by the present invention has high cycle life, specific capacity and coulombic efficiency.

## Description

### TECHNICAL FIELD

The present invention relates to the field of lithium-sulfur batteries, and in particular to a lithium-sulfur battery cathode material and a preparation method thereof, a lithium-sulfur battery cathode and a preparation method thereof, and the lithium-sulfur battery.

### BACKGROUND

A lithium-sulfur battery has been much focused because of advantages such as high specific capacity (1672 mAh·g⁻¹) and high energy density (2567 Wh·kg⁻¹) as well as low cost, abundant reserve, environmental protection and the like of sulfur of a cathode material, and is expected to become a next generation of energy storage battery to replace the traditional lithium-ion battery. At present, main obstacles for commercialization of the lithium-sulfur battery lies in: (1) an intermediate product lithium polysulfide (Li₂Sₙ, 4≤n≤8) has an "shuttling effect" between a sulfur cathode and a lithium anode so that the capacity of the lithium-ion battery is attenuated; (2) the electronic/ionic conductivities of sulfur and a discharge product Li₂S are poor; and (3) the sulfur has volume expansion in a lithiation process (about 80%). These problems result in that the utilization rate of the active substance sulfur is low, the attenuation of the battery capacity is fast, the coulombic efficiency is low and the cycle performance is poor.

In order to solve the above problems, much effort has been devoted to developing a porous carbon material having a high conductivity and a high specific surface area to serve as a sulfur host. However, the high specific capacity of the porous carbon material/sulfur cathode can only maintain previous dozens of charge-discharge cycles and hereupon has obvious capacity attenuation, so that the requirement of people cannot be met.

### SUMMARY

The present invention provides a lithium-sulfur battery cathode material and a preparation method thereof, a lithium-sulfur battery cathode and a preparation method thereof, and the lithium-sulfur battery. The lithium-sulfur battery provided by the present invention has high specific capacity, excellent cycle performance and high coulombic efficiency.

The present invention provides a lithium-sulfur battery cathode material, including MXene and functional carbon cloth, where the MXene is attached to a fiber surface of the functional carbon cloth, the MXene includes metal carbide or metal nitride, and metal components in the metal carbide and the metal nitride independently include titanium, vanadium, chromium or molybdenum; and the surface of the functional carbon cloth contains hydroxyl and carboxyl functional groups.

Preferably, the MXene includes Ti₃C₂, Ti₂C, Ti₂N, Cr₂C, V₂N or Mo₃C₂.

Preferably, the mass ratio of the MXene to the functional carbon cloth is 0.01-0.1:1.

The present invention further provides a method for preparing the lithium-sulfur battery cathode material in the above technical solution, including the following steps:
(1) soaking carbon cloth into concentrated nitric acid to obtain functional carbon cloth;
(2) mixing MXene with water to obtain a suspension; and
(3) immersing the functional carbon cloth into the suspension, standing, and then subjecting to vacuum drying to obtain the lithium-sulfur battery cathode material.

The step (1) and the step (2) have no order of priority.

Preferably, a method for preparing the MXene in the step (2) includes:
(a) corroding a ternary layered ceramic material MAX by using hydrofluoric acid to obtain a binary layered ceramic material, where the M in the ternary layered ceramic material MAX represents metal titanium, vanadium, chromium or molybdenum, the A represents silicon or aluminum, and the X represents carbon or nitrogen;
(b) ultrasonically stripping the binary layered ceramic material by using dimethyl sulfoxide, centrifuging, and collecting a solid; and
(c) ultrasonically mixing the solid collected in the step (b) with deionized water and drying to obtain the MXene.

Preferably, the concentration of the suspension in the step (2) is 0.1-10 mg·mL⁻¹.

Preferably, the temperature for the vacuum drying in the step (3) is 40-100 °C and the time is 5-24 h.

The present invention further provides a lithium-sulfur battery cathode; and an active material of the lithium-sulfur battery cathode is the lithium-sulfur battery cathode material in the above solution or a lithium-sulfur battery cathode material prepared with the method in the above technical solution.

The present invention further provides a method for preparing the lithium-sulfur battery cathode in the above technical solution, including the following steps:
(i) mixing polyvinylidene fluoride, sublimed sulfur and acetylene black with N-methylpyrrolidone to obtain a mixed slurry; and
(ii) immersing a lithium-sulfur battery cathode material into the mixed slurry obtained in the step (i), and then subjecting to vacuum drying to obtain the lithium-sulfur battery cathode, where the lithium-sulfur battery cathode material is the lithium-sulfur battery cathode material in the above technical solution or the lithium-sulfur battery cathode material prepared with the method in the above technical solution.

The present invention further provides a lithium-sulfur battery; and a lithium-sulfur battery cathode is the lithium-sulfur battery cathode in the above solution or a lithium-sulfur battery cathode prepared with the method in the above technical solution.

A lithium-sulfur battery cathode material provided by the present invention includes MXene and functional carbon cloth, where the MXene is attached to the fiber surface of the functional carbon cloth, the MXene includes metal carbide or metal nitride, and metal components in the metal carbide and the metal nitride independently include titanium, vanadium, chromium or molybdenum; and the surface of the functional carbon cloth contains hydroxyl and carboxyl functional groups. In the present invention, the MXene is attached to the fiber surface of the functional carbon cloth, so that a lot of folds and pores are formed on the fiber surface to improve the sulfur loading capacity, increase the chemical adsorption site for lithium polysulfide and effectively inhibit the "shuttling effect". In addition, the lithium-sulfur battery cathode material provided by the present invention takes the carbon cloth as a flexible substrate, so the conductivity of a lithium-sulfur battery cathode can be improved, and because of the excellent mechanical performance of the carbon cloth, the pulverization of the lithium-sulfur battery cathode can further be prevented in a repeated charge-discharge process, and thus the cycle life, specific capacity and coulombic efficiency of the battery are improved.

The present invention further provides a lithium-sulfur battery cathode prepared from the lithium-sulfur battery cathode material. In view of the structural characteristics of the lithium-sulfur battery cathode material, the electrochemical performance of the lithium-sulfur battery cathode provided by the present invention is excellent, and the cycle life, specific capacity and coulombic efficiency are high.

The present invention further provides a lithium-sulfur battery assembled by the lithium-sulfur battery cathode. In view of the structural characteristics of the lithium-sulfur battery cathode material, the performance of the lithium-sulfur battery cathode is excellent and thus the performance of the lithium-sulfur battery is excellent. It is indicated by results in embodiments that the initial capacity of the lithium-sulfur battery provided by the present invention at a 0.5 C current density is 648.0-1436.1 mAh·g⁻¹; after 500 cycles, the capacity is 268.6-862.8 mAh·g⁻¹, the discharge retention rate is up to 38.84%-73.42%, and the attenuation rate for each cycle is 0.04%-0.12%; and with 500 cycles, the mean value of the coulombic efficiency is 98.96%-100.53%, the standard deviation is 0.4282%-1.0879%, and the standard deviation with 100% is 0.5267%-1.2098%.

### BRIEF DESCRIPTION OF THE DRAWINGS

FIG. 1 is a scanning electron microscope (SEM) image of a lithium-sulfur battery cathode material prepared in Embodiment 1.
FIG. 2 is a pore distribution diagram and a nitrogen adsorption-desorption isothermal curve of a lithium-sulfur battery cathode material prepared in Embodiment 1.
FIG. 3 is an X-ray photoelectron spectroscopy analysis spectrogram and a high-resolution Ti 2p diagram of a lithium-sulfur battery cathode material prepared in Embodiment 1.
FIG. 4 is a galvanostatic charge-discharge curve graph of a lithium-sulfur battery cathode prepared in Embodiment 1 at a 0.5 C current density.
FIG. 5 is a rate performance graph of a lithium-sulfur battery cathode prepared in Embodiment 1 at different current densities.
FIG. 6 is a cycle performance and coulombic efficiency graph of a lithium-sulfur battery cathode prepared in Embodiment 1 at a 0.5 C current density.
FIG. 7 is a cycle performance and coulombic efficiency graph of a lithium-sulfur battery cathode prepared in Embodiment 2 at a 0.5 C current density.
FIG. 8 is a cycle performance and coulombic efficiency graph of a lithium-sulfur battery cathode prepared in Embodiment 3 at a 0.5 C current density.
FIG. 9 is a cycle performance and coulombic efficiency graph of a lithium-sulfur battery cathode prepared in Embodiment 4 at a 0.5 C current density.
FIG. 10 is a cycle performance and coulombic efficiency graph of a lithium-sulfur battery cathode prepared in Embodiment 5 at a 0.5 C current density.
FIG. 11 is a cycle performance and coulombic efficiency graph of a lithium-sulfur battery cathode prepared in Embodiment 6 at a 0.5 C current density.
FIG. 12 is a cycle performance and coulombic efficiency graph of a lithium-sulfur battery cathode prepared in Embodiment 7 at a 0.5 C current density.

### DETAILED DESCRIPTION

The present invention provides a lithium-sulfur battery cathode material, including MXene and functional carbon cloth, where the MXene is attached to a fiber surface of the functional carbon cloth, the MXene includes metal carbide or metal nitride, and metal components in the metal carbide and the metal nitride independently include titanium, vanadium, chromium or molybdenum; and the surface of the functional carbon cloth contains hydroxyl and carboxyl functional groups.

In the present invention, the MXene preferably includes Ti₃C₂, Ti₂C, Ti₂N, Cr₂C, V₂N or Mo₃C₂. The MXene is a binary two-dimensional (2D) layered material. Layers of the MXene are not overlapped or the number of overlapped layers is ≤ 10 layers, preferably ≤ 6 layers, more preferably ≤ 4 layers, and most preferably ≤ 2 layers. The present invention preferably controls the number of overlapped layers of the MXene within the above range to improve the specific surface area of the lithium-sulfur battery cathode material and to improve the electrochemical performance of a lithium-sulfur battery cathode.

In the present invention, a method for preparing the MXene preferably includes the following steps:
(a) Corrode a ternary layered ceramic material MAX by using hydrofluoric acid to obtain a binary layered ceramic material, where the M in the ternary layered ceramic material MAX represents metal titanium, vanadium, chromium or molybdenum, the A represents silicon or aluminum, and the X represents carbon or nitrogen.
(b) Mix the binary layered ceramic material with dimethyl sulfoxide, centrifuge, and collect a solid.
(c) Ultrasonically mix the solid collected in the step (b) with deionized water to obtain the MXene.

According to the present invention, a ternary layered ceramic material MAX is mixed with hydrofluoric acid to obtain a binary layered ceramic material. In the present invention, three components in the ternary layered ceramic material MAX are respectively metal, silicon or aluminum, carbon or nitrogen, and the metal includes titanium, vanadium, chromium or molybdenum. In the present invention, the ternary layered ceramic material MAX further preferably includes Ti₃AlC₂, Ti₃SiC₂, Ti₂AlC, Ti₂AlN, Cr₂AlC, V₂AlN or Mo₃AlC₂. The ternary layered ceramic material MAX is mixed with the hydrofluoric acid, and the concentration of the hydrofluoric acid is preferably 40%. The usage ratio of the ternary layered ceramic material MAX to the hydrofluoric acid is preferably 1-10 g: 10-100 mL, further preferably 1-5 g: 20-80 mL, and more preferably 1 g: 40 mL. In the present invention, the mixing is preferably stirred mixing. The temperature for the mixing is preferably a room temperature; and the time for the mixing is preferably 12-48 h, further preferably 20-35 h and more preferably 24 h. The hydrofluoric acid is employed to treat the ternary layered ceramic material MAX, and an aluminum element or a silicon element in the ternary layered ceramic material is corroded by the hydrofluoric acid to obtain the binary layered ceramic material. Upon the completion of the treatment of the hydrofluoric acid, the material is preferably washed by sequentially using ethanol and water, and is dried to remove the remained hydrofluoric acid.

After the binary layered ceramic material is obtained, the binary layered ceramic material is mixed with the dimethyl sulfoxide, the mixed liquid is centrifuged and the solid is collected. In the present invention, the mixing is preferably stirred mixing. The time for the stirred mixing is preferably 12-48 h, further preferably 20-35 h, and more preferably 20 h. By mixing the binary layered ceramic material with the dimethyl sulfoxide, the dimethyl sulfoxide can separate the binary layered ceramic material and separates the original binary layered ceramic material having more number of layers into the binary layered ceramic material having a single layer or a few several layers. Upon the completion of the mixing, the mixed liquid is centrifuged and the solid is collected.

The collected solid is ultrasonically mixed with the deionized water to obtain the MXene. Argon is preferably charged in the ultrasonic mixing to remove oxygen, and the time for the ultrasonic mixing is preferably 10-120 min, further preferably 30-100 min and more preferably 60 min. With the ultrasonic mixing, the binary layered ceramic material is further separated into the binary layered ceramic material having the single layer or the few several layers. Upon the completion of the ultrasonic mixing, the mixture is preferably dried to obtain the MXene.

In the present invention, the mass ratio of the MXene to the functional carbon cloth in the lithium-sulfur battery cathode material is preferably 0.01-0.1: 1, further preferably 0.02-0.08: 1, and more preferably 0.04-0.06: 1.

According to the present invention, as the MXene is attached to the functional carbon cloth, the stacked agglomeration problem of the MXene in use may be prevented. Meanwhile, the MXene forms a lot of folds and pores on the fiber surface of the functional carbon cloth to improve the sulfur loading capacity, increase the chemical adsorption site for lithium polysulfide, effectively inhibit the "shuttling effect", and improve the electrochemical performance of the lithium-sulfur battery cathode. Fibers of the functional carbon cloth provide a high-speed conduction channel for an electron to improve the conductivity of an electrode of the lithium-sulfur battery. In the present invention, with the MXene attached on the fiber surface of carbon cloth, the mechanical performance of the carbon cloth may further be improved, the pulverization of the electrode can further be prevented in a repeated charge-discharge process, and thus the service life, specific capacity and coulombic efficiency of the electrode are improved.

The present invention further provides a method for preparing the lithium-sulfur battery cathode material in the above technical solution, including the following steps:
(1) Soak carbon cloth into concentrated nitric acid to obtain functional carbon cloth.
(2) Mix MXene with water to obtain a suspension.
(3) Immerse the functional carbon cloth into the suspension, stand, and then heat to obtain the lithium-sulfur battery cathode material.

The step (1) and the step (2) have no order of priority.

According to the present invention, carbon cloth is soaked into concentrated nitric acid to obtain functional carbon cloth. Before the carbon cloth is soaked into the concentrated nitric acid, the carbon cloth is preferably pretreated, and the pretreatment method preferably includes: ultrasonically wash the carbon cloth by sequentially using ethanol, acetone and deionized water, and then dry the carbon cloth. The carbon cloth is preferably pretreated to remove a foreign matter on a surface of the carbon cloth. In the present invention, the mass fraction of the concentrated nitric acid is preferably 68%, and the time during which the carbon cloth is soaked into the concentrated nitric acid is preferably 2-24 h, further preferably 5-20 h and more preferably 12 h. In the present invention, upon the completion of the soaking, the carbon cloth is preferably washed by sequentially using the ethanol and the deionized water, and then is dried to obtain the functional carbon cloth. With the treatment of the concentrated nitric acid, the surface of the carbon cloth is oxidized to form hydroxyl and carboxyl functional groups on the surface of the carbon cloth. The source of the carbon cloth is not particularly required by the present invention, and commercially-available carbon cloth may be used.

According to the present invention, MXene is mixed with water to obtain a suspension. In the present invention, the concentration of the suspension is preferably 0.1-10 mg·mL⁻¹, further preferably 1-8 mg·mL⁻¹ and more preferably 3-6 mg·mL⁻¹. In a specific embodiment of the present invention, it is preferable that when the MXene is prepared, after the collected solid is ultrasonically mixed with the deionized water, the suspension of the mixed MXene and water may be obtained without the drying.

In the present invention, the preparation of the functional carbon cloth and the preparation of the suspension have no order of priority.

After the functional carbon cloth and the suspension are obtained, the functional carbon cloth is immersed into the suspension, stood, and then subjected to vacuum drying to obtain the lithium-sulfur battery cathode material.

In the present invention, the mass ratio of the MXene in the suspension to the functional carbon cloth is preferably 0.01-0.1: 1, further preferably 0.02-0.08: 1, and more preferably 0.04-0.06: 1. In the present invention, the time for the standing is preferably 2-30 s. In the present invention, the temperature for the vacuum drying is preferably 40-100°C, further preferably 50-90°C and more preferably 60-80°C; and the time for the vacuum drying is preferably 5-24 h, further preferably 8-20 h and more preferably 10-15 h. With the vacuum drying, a solvent in the suspension is removed, so that the MXene is attached to the fibers of the functional carbon cloth. The present invention preferably controls the temperature and the time for the vacuum drying within the above ranges, so that the MXene is uniformly attached to the fibers of the carbon cloth and thus the electrochemical performance of a lithium-sulfur battery cathode is improved.

The present invention further provides a method for preparing a lithium-sulfur battery cathode, including the following steps:
(i) Mix polyvinylidene fluoride, sublimed sulfur and acetylene black with N-methylpyrrolidone to obtain a mixed slurry.
(ii) Immerse a lithium-sulfur battery cathode material into the mixed slurry obtained in the step (i), and then subject to vacuum drying to obtain the lithium-sulfur battery cathode, where the lithium-sulfur battery cathode material is the lithium-sulfur battery cathode material in the above technical solution or the lithium-sulfur battery cathode material prepared with the method in the above technical solution.

According to the present invention, polyvinylidene fluoride, sublimed sulfur and acetylene black are mixed with N-methylpyrrolidone to obtain a mixed slurry. Preferably, the polyvinylidene fluoride, the sublimed sulfur and the acetylene black are subjected to ball milling; and the rotational speed for the ball milling is preferably 200-800 rpm, and further preferably 400-600 rpm. In the present invention, with the ball milling, the polyvinylidene fluoride, the sublimed sulfur and the acetylene black are dispersed fully. Upon the completion of the ball milling, the polyvinylidene fluoride, the sublimed sulfur and the acetylene black are mixed with the N-methylpyrrolidone to obtain the mixed slurry; the mass ratio of the polyvinylidene fluoride to the sublimed sulfur to the acetylene black is preferably 1:6-8:1-3, further preferably 1:6.5-7.5:1.5-2.5, and more preferably 1:7:2; and the mass concentration of a mixture of the polyvinylidene fluoride, the sublimed sulfur and the acetylene black in the mixed slurry is preferably 0.1-2 mg·mL⁻¹, further preferably 0.2-1.8 mg·mL⁻¹, and more preferably 0.5-1.5 mg·mL⁻¹.

After the mixed slurry is obtained, a lithium-sulfur battery cathode material is immersed into the mixed slurry, and then subjected to the vacuum drying to obtain the lithium-sulfur battery cathode.

In the present invention, the lithium-sulfur battery cathode material is the lithium-sulfur battery cathode material in the above solution or the lithium-sulfur battery cathode material prepared with the method in the above technical solution.

In the present invention, the mass ratio of the sublimed sulfur in the mixed slurry to the lithium-sulfur battery cathode material is preferably 1:0.1-0.5, and more preferably 1:0.2-0.4. In the present invention, the time during which the lithium-sulfur battery cathode material is immersed into the mixed slurry is preferably 2-30 s, further preferably 5-25 s, and more preferably 10-20 s. In the present invention, the temperature for the vacuum drying is preferably 40-100°C, further preferably 50-90°C and more preferably 60-80°C; and the time for the vacuum drying is preferably 5-24 h, further preferably 8-20 h and more preferably 10-15 h. With the vacuum drying, the solvent N-methylpyrrolidone is volatilized. The present invention preferably controls the temperature and the time for the vacuum drying within the above ranges, so that components of the prepared lithium-sulfur battery cathode are uniform, and the electrochemical performance is excellent.

The present invention further provides a lithium-sulfur battery; and a lithium-sulfur battery cathode is the lithium-sulfur battery cathode in the above solution or the lithium-sulfur battery cathode prepared with the method in the above technical solution.

In the present invention, a anode of the lithium-sulfur battery is preferably a metal lithium piece; an electrolyte of the lithium-sulfur battery is preferably a lithium bis(trifluoromethanesulphonyl) imide solution; the concentration of the lithium bis(trifluoromethanesulphonyl) imide solution is preferably 0.1-5 mol·L⁻¹, and further preferably 1 mol·L⁻¹; solvent components of the lithium bis(trifluoromethanesulphonyl) imide solution preferably include 1,3-dioxolane, ethylene glycol dimethyl ether and lithium nitrate; and a diaphragm of the lithium-sulfur battery is preferably a Celegard2400 type polypropylene film.

In the present invention, the volume ratio of the 1,3-dioxolane to the ethylene glycol dimethyl ether in a solvent of the lithium bis(trifluoromethanesulphonyl) imide solution is preferably 1: 0.5-2, and further preferably 1: 1; and the mass fraction of the lithium nitrate in the solvent is preferably 0.1%-5%, and further preferably 1%.

The technical solutions in the present invention are described below clearly and completely in conjunction with embodiments of the present invention.

### Embodiment 1

### (1) Functional treatment of carbon cloth

First of all, commercially-available carbon cloth was cut into a needed size; then, the carbon cloth was washed ultrasonically by respectively using ethanol and acetone to remove a foreign matter on a surface of the carbon cloth; next, the carbon cloth was washed by using deionized water and dried; and at last, the carbon cloth was immersed into concentrated nitric acid for 12 h, taken out, then washed by respectively using the ethanol and the deionized water and dried to obtain functional carbon cloth.

### (2) Preparation of Ti₃C₂ nanosheet

1 g of commercially-available Ti₃AlC₂ powder and 40 mL of commercially-available hydrofluoric acid were added to a polytetrafluoroethylene beaker, and stirred at a room temperature to react for 24 h; then, the reacted solution was centrifugally washed by respectively using the ethanol and water and dried to obtain a binary layered ceramic material; next, the binary layered ceramic material was added to 10 mL of dimethyl sulfoxide and stirred to react for 20 h; and thereafter, a mixture obtained by the reaction was centrifuged, a supernatant liquid was poured, then 500 mL of deionized water was added, argon was charged to remove oxygen in the water, and the solution was ultrasonically treated for 1 h to obtain a Ti₃C₂ nanosheet suspension.

### (3) Preparation of cathode material of lithium-sulfur battery

The Ti₃C₂ nanosheet suspension in the step (2) was prepared into a suspension of which the mass concentration was 0.5 mg·mL⁻¹; according to a mass ratio of 0.1: 1 of the Ti₃C₂ nanosheet to the functional carbon cloth, the Ti₃C₂ nanosheet suspension and the cut functional carbon cloth were taken; then, the functional carbon cloth was immersed into the Ti₃C₂ nanosheet suspension and stood for 30 s; and at last, the functional carbon cloth was treated for 12 h at 60°C under a vacuum condition to obtain the lithium-sulfur battery cathode material.

### (4) Preparation of cathode of lithium-sulfur battery

Polyvinylidene fluoride, sublimed sulfur and acetylene black were mixed according to a mass ratio of 1:7:2 to obtain mixed powder; then, the mixed powder was subjected to ball milling for 0.5 h under a 500 rpm condition and taken out; with N-methylpyrrolidone as a solvent, the mixed powder was mixed with the N-methylpyrrolidone to obtain a mixed slurry, where the total mass concentration of a mixture in the mixed slurry was 1 mg·mL⁻¹; the lithium-sulfur battery cathode material was mixed with the mixed slurry, stood for 30 s, and treated for 24 h at 40°C under the vacuum condition to obtain the cathode of the lithium sulfur battery, where the mass ratio of the sublimed sulfur in the mixed slurry to the lithium-sulfur battery cathode material was 1:0.2.

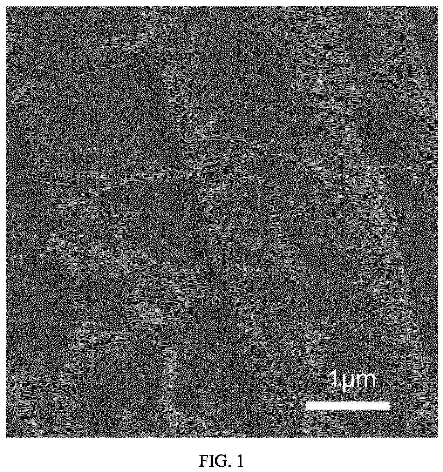

With an SEM test on the lithium-sulfur battery cathode material prepared in the step (3) of the embodiment 1, the test results are shown in FIG. 1. As can be seen from FIG. 1, the Ti₃C₂ nanosheet is attached and grown on fibers of the functional carbon cloth.

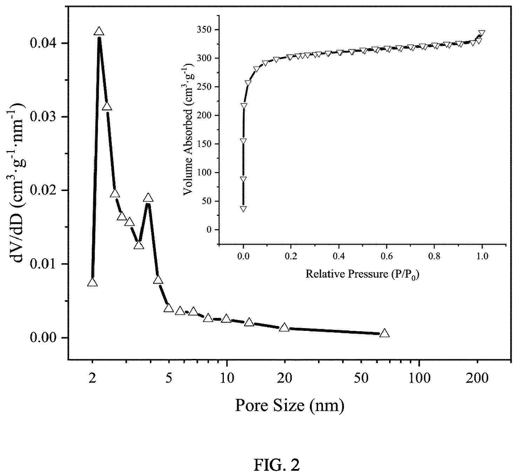

With pore structure characterization on the lithium-sulfur battery cathode material prepared in the step (3) of the embodiment 1, the results are shown in FIG. 2. FIG. 2 is a pore distribution diagram and a nitrogen adsorption-desorption isothermal curve of a lithium-sulfur battery cathode material. As can be seen from FIG. 2, the specific surface area of the lithium-sulfur battery cathode material is up to 977.8 m²·g⁻¹, the adsorption-desorption isothermal curve is of an IV type, and the sharp decrease within an ultra-low voltage range of a relative pressure P/Po indicates the existence of a lot of micropores and small mesopores.

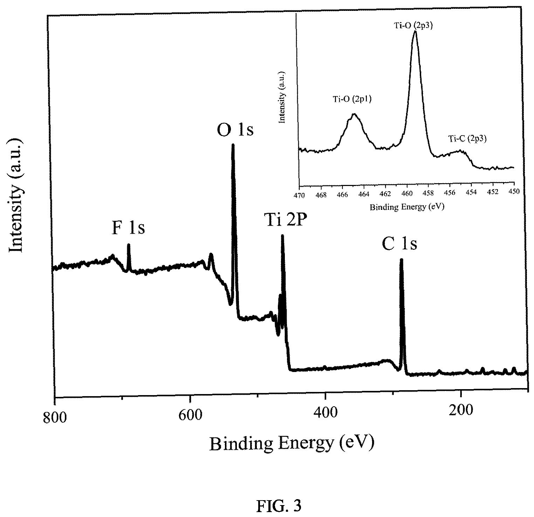

With X-ray photoelectron spectroscopy analysis on the lithium-sulfur battery cathode material prepared in the step (3) of the embodiment 1, the test results are shown in FIG. 3. As can be seen from FIG. 3, the Ti 2p peak is clear and evident, which indicates that the Ti₃C₂ is attached and grown on surface fibers of the functional carbon cloth.

### Embodiment 2

### (1) Preparation of functional carbon cloth

The step (1) is carried out according to the method in the embodiment 1 to obtain the functional carbon cloth.

### (2) Preparation of Ti₃C₂ nanosheet

1 g of commercially-available Ti₃SiC₂ powder and 40 mL of commercially-available hydrofluoric acid were added to a polytetrafluoroethylene beaker, and stirred at a room temperature to react for 24 h; then, the reacted solution was centrifugally washed by respectively using ethanol and water and dried to obtain a binary layered ceramic material; next, the binary layered ceramic material was added to 10 mL of dimethyl sulfoxide and stirred to react for 20 h; and thereafter, a mixture obtained by the reaction was centrifuged, a supernatant liquid was poured, then 500 mL of deionized water was added, argon was charged to remove oxygen in the water, and the solution was ultrasonically treated for 1 h to obtain a Ti₃C₂ nanosheet suspension.

### (3) Preparation of cathode material of lithium-sulfur battery

The Ti₃C₂ nanosheet suspension in the step (2) was prepared into a suspension of which the mass concentration was 10 mg·mL⁻¹; according to a mass ratio of 0.05:1 of the Ti₃C₂ nanosheet to the functional carbon cloth, the Ti₃C₂ nanosheet suspension and the cut functional carbon cloth were taken; then, the functional carbon cloth was immersed into the Ti₃C₂ nanosheet suspension and stood for 20 s; and at last, the functional carbon cloth was treated for 20 h at 80°C under a vacuum condition to obtain the lithium-sulfur battery cathode material.

### (4) Preparation of cathode of lithium-sulfur battery

Polyvinylidene fluoride, sublimed sulfur and acetylene black were mixed according to a mass ratio of 1:8:1 to obtain mixed powder; then, the mixed powder was subjected to ball milling for 2 h under a 200 rpm condition and taken out; with N-methylpyrrolidone as a solvent, the mixed powder was mixed with the N-methylpyrrolidone to obtain a mixed slurry, where the total mass concentration of a mixture in the mixed slurry was 2 mg·mL⁻¹; the lithium-sulfur battery cathode material was mixed with the mixed slurry, stood for 20 s, and treated for 5 h at 100°C under the vacuum condition to obtain the lithium-sulfur battery cathode, where the mass ratio of the sublimed sulfur in the mixed slurry to the lithium-sulfur battery cathode material was 1:0.5.

### Embodiment 3

### (1) Preparation of functional carbon cloth

The step (1) is carried out according to the method in the embodiment 1 to obtain the functional carbon cloth.

### (2) Preparation of Ti₂C nanosheet

1 g of commercially-available Ti₂AlC powder and 40 mL of commercially-available hydrofluoric acid were added to a polytetrafluoroethylene beaker, and stirred at a room temperature to react for 24 h; then, the reacted solution was centrifugally washed by respectively using ethanol and water and dried to obtain a binary layered ceramic material; next, the binary layered ceramic material was added to 10 mL of dimethyl sulfoxide and stirred to react for 20 h; and thereafter, a mixture obtained by the reaction was centrifuged, a supernatant liquid was poured, then 500 mL of deionized water was added, argon was charged to remove oxygen in the water, and the solution was ultrasonically treated for 1 h to obtain a Ti₂C nanosheet suspension.

### (3) Preparation of cathode material of lithium-sulfur battery

The Ti₂C nanosheet suspension in the step (2) was prepared into a suspension of which the mass concentration was 0.1 mg·mL⁻¹; according to a mass ratio of 0.02:1 of the Ti₂C nanosheet to the functional carbon cloth, the Ti₂C nanosheet suspension and the cut functional carbon cloth were taken; then, the functional carbon cloth was immersed into the Ti₂C nanosheet suspension and stood for 10 s; and at last, the functional carbon cloth was treated for 10 h at 70°C under a vacuum condition to obtain the lithium-sulfur battery cathode material.

### (4) Preparation of cathode of lithium-sulfur battery

Polyvinylidene fluoride, sublimed sulfur and acetylene black were mixed according to a mass ratio of 1: 6: 3 to obtain mixed powder; then, the mixed powder was subjected to ball milling for 1 h under a 800 rpm condition and taken out; with N-methylpyrrolidone as a solvent, the mixed powder was mixed with the N-methylpyrrolidone to obtain a mixed slurry, where the total mass concentration of a mixture in the mixed slurry was 1.5 mg·mL⁻¹; the lithium-sulfur battery cathode material was mixed with the mixed slurry, stood for 5 s, and treated for 10 h at 80°C under the vacuum condition to obtain the lithium-sulfur battery cathode, where the mass ratio of the sublimed sulfur in the mixed slurry to the lithium-sulfur battery cathode material was 1: 0.3.

### Embodiment 4

### (1) Preparation of functional carbon cloth

The step (1) is carried out according to the method in the embodiment 1 to obtain the functional carbon cloth.

### (2) Preparation of Ti₂N nanosheet

1 g of commercially-available Ti₂AlN powder and 40 mL of commercially-available hydrofluoric acid were added to a polytetrafluoroethylene beaker, and stirred at a room temperature to react for 24 h; then, the reacted solution was centrifugally washed by respectively using ethanol and water and dried to obtain a binary layered ceramic material; next, the binary layered ceramic material was added to 10 mL of dimethyl sulfoxide and stirred to react for 20 h; and thereafter, a mixture obtained by the reaction was centrifuged, a supernatant liquid was poured, then 500 mL of deionized water was added, argon was charged to remove oxygen in the water, and the solution was ultrasonically treated for 1 h to obtain a Ti₂N nanosheet suspension.

### (3) Preparation of cathode material of lithium-sulfur battery

The Ti₂N nanosheet suspension in the step (2) was prepared into a suspension of which the mass concentration was 1 mg·mL⁻¹; according to a mass ratio of 0.01:1 of the Ti₂N nanosheet to the functional carbon cloth, the Ti₂N nanosheet suspension and the cut functional carbon cloth were taken; then, the functional carbon cloth was immersed into the Ti₂N nanosheet suspension and stood for 5 s; and at last, the functional carbon cloth was treated for 24 h at 50°C under a vacuum condition to obtain the lithium-sulfur battery cathode material.

### (4) Preparation of cathode of lithium-sulfur battery

Polyvinylidene fluoride, sublimed sulfur and acetylene black were mixed according to a mass ratio of 1:7:2 to obtain mixed powder; then, the mixed powder was subjected to ball milling for 0.1 h under a 600 rpm condition and taken out; with N-methylpyrrolidone as a solvent, the mixed powder was mixed with the N-methylpyrrolidone to obtain a mixed slurry, where the total mass concentration of a mixture in the mixed slurry was 0.1 mg·mL⁻¹; the lithium-sulfur battery cathode material was mixed with the mixed slurry, stood for 2 s, and reacted for 20 h at 50°C under the vacuum condition to obtain the lithium-sulfur battery cathode, where the mass ratio of the sublimed sulfur in the mixed slurry to the lithium-sulfur battery cathode material was 1:0.1.

### Embodiment 5

### (1) Preparation of functional carbon cloth

The step (1) is carried out according to the method in the embodiment 1 to obtain the functional carbon cloth.

### (2) Preparation of Cr₂C nanosheet

1 g of commercially-available Cr₂AlC powder and 40 mL of commercially-available hydrofluoric acid were added to a polytetrafluoroethylene beaker, and stirred at a room temperature to react for 24 h; then, the reacted solution was centrifugally washed by respectively using ethanol and water and dried to obtain a binary layered ceramic material; next, the binary layered ceramic material was added to 10 mL of dimethyl sulfoxide and stirred to react for 20 h; and thereafter, a mixture obtained by the reaction was centrifuged, a supernatant liquid was poured, then 500 mL of deionized water was added, argon was charged to remove oxygen in the water, and the solution was ultrasonically treated for 1 h to obtain a Cr₂C nanosheet suspension.

### (3) Preparation of cathode material of lithium-sulfur battery

The Cr₂C nanosheet suspension in the step (2) was prepared into a suspension of which the mass concentration was 5 mg·mL⁻¹; according to a mass ratio of 0.08: 1 of the Cr₂C nanosheet to the functional carbon cloth, the Cr₂C nanosheet suspension and the cut functional carbon cloth were taken; then, the functional carbon cloth was immersed into the Cr₂C nanosheet suspension and stood for 15 s; and at last, the functional carbon cloth was treated for 15 h at 50°C under a vacuum condition to obtain the lithium-sulfur battery cathode material.

### (4) Preparation of cathode of lithium-sulfur battery

Polyvinylidene fluoride, sublimed sulfur and acetylene black were mixed according to a mass ratio of 1:6:3 to obtain mixed powder; then, the mixed powder was subjected to ball milling for 2 h under a 400 rpm condition and taken out; with N-methylpyrrolidone as a solvent, the mixed powder was mixed with the N-methylpyrrolidone to obtain a mixed slurry, where the total mass concentration of a mixture in the mixed slurry was 1 mg·mL⁻¹; the lithium-sulfur battery cathode material was mixed with the mixed slurry, stood for 20 s, and treated for 12 h at 80°C under the vacuum condition to obtain the lithium-sulfur battery cathode, where the mass ratio of the sublimed sulfur in the mixed slurry to the lithium-sulfur battery cathode material was 1: 0.4.

### Embodiment 6

### (1) Preparation of functional carbon cloth

The step (1) is carried out according to the method in the embodiment 1 to obtain the functional carbon cloth.

### (2)Preparation of V₂C nanosheet

1 g of commercially-available V₂AlC powder and 40 mL of commercially-available hydrofluoric acid were added to a polytetrafluoroethylene beaker, and stirred at a room temperature to react for 24 h; then, the reacted solution was centrifugally washed by respectively using ethanol and water and dried to obtain a binary layered ceramic material; next, the binary layered ceramic material was added to 10 mL of dimethyl sulfoxide and stirred to react for 20 h; and thereafter, a mixture obtained by the reaction was centrifuged, a supernatant liquid was poured, then 500 mL of deionized water was added, argon was charged to remove oxygen in the water, and the solution was ultrasonically treated for 1 h to obtain a V₂AlC nanosheet suspension.

### (3) Preparation of cathode material of lithium-sulfur battery

The V₂C nanosheet suspension in the step (2) was prepared into a suspension of which the mass concentration was 8 mg·mL⁻¹; according to a mass ratio of 0.05:1 of the V₂C nanosheet to the functional carbon cloth, the V₂C nanosheet suspension and the cut functional carbon cloth were taken; then, the functional carbon cloth was immersed into the V₂C nanosheet suspension and stood for 25 s; and at last, the functional carbon cloth was treated for 12 h at 80°C under a vacuum condition to obtain the lithium-sulfur battery cathode material.

### (4) Preparation of cathode of lithium-sulfur battery

Polyvinylidene fluoride, sublimed sulfur and acetylene black were mixed according to a mass ratio of 1:6:3 to obtain mixed powder; then, the mixed powder was subjected to ball milling for 1.5 h under a 400 rpm condition and taken out; with N-methylpyrrolidone as a solvent, the mixed powder was mixed with the N-methylpyrrolidone to obtain a mixed slurry, where the total mass concentration of a mixture in the mixed slurry was 0.5 mg·mL⁻¹; the lithium-sulfur battery cathode material was mixed with the mixed slurry, stood for 15 s, and treated for 24 h at 40°C under the vacuum condition to obtain the lithium-sulfur battery cathode, where the mass ratio of the sublimed sulfur in the mixed slurry to the lithium-sulfur battery cathode material was 1:0.25.

### Embodiment 7

### (1) Preparation of functional carbon cloth

The step (1) is carried out according to the method in the embodiment 1 to obtain the functional carbon cloth.

### (2) Preparation of Mo₃C₂ nanosheet

1 g of commercially-available Mo₃AlC₂ powder and 40 mL of commercially-available hydrofluoric acid were added to a polytetrafluoroethylene beaker, and stirred at a room temperature to react for 24 h; then, the reacted solution was centrifugally washed by respectively using ethanol and water and dried to obtain a binary layered ceramic material; next, the binary layered ceramic material was added to 10 mL of dimethyl sulfoxide and stirred to react for 20 h; and thereafter, a mixture obtained by the reaction was centrifuged, a supernatant liquid was poured, then 500 mL of deionized water was added, argon was charged to remove oxygen in the water, and the solution was ultrasonically treated for 1 h to obtain a Mo₃C₂ nanosheet suspension.

### (3) Preparation of cathode material of lithium-sulfur battery

The Mo₃C₂ nanosheet suspension in the step (2) was prepared into a suspension of which the mass concentration was 2.5 mg·mL⁻¹; according to a mass ratio of 0.02:1 of the Mo₃C₂ nanosheet to the functional carbon cloth, the Mo₃C₂ nanosheet suspension and the cut functional carbon cloth were taken; then, the functional carbon cloth was immersed into the Mo₃C₂ nanosheet suspension and stood for 25 s; and at last, the functional carbon cloth was treated for 5 h at 100°C under a vacuum condition to obtain the lithium-sulfur battery cathode material.

### (4) Preparation of cathode of lithium-sulfur battery

Polyvinylidene fluoride, sublimed sulfur and acetylene black were mixed according to a mass ratio of 1: 7: 2 to obtain mixed powder; then, the mixed powder was subjected to ball milling for 1.5 h under a 300 rpm condition and taken out; with N-methylpyrrolidone as a solvent, the mixed powder was mixed with the N-methylpyrrolidone to obtain a mixed slurry, where the total mass concentration of a mixture in the mixed slurry was 0.5 mg·mL⁻¹; the lithium-sulfur battery cathode material was mixed with the mixed slurry, stood for 10 s, and treated for 12 h at 60°C under the vacuum condition to obtain the lithium-sulfur battery cathode, where the mass ratio of the sublimed sulfur in the mixed slurry to the lithium-sulfur battery cathode material was 1:0.25.

With the SEM test, the pore structure characterization and the X-ray photoelectron spectroscopy analysis on the cathode materials of the lithium-sulfur battery prepared in the embodiment 2 to the embodiment 7, the results are similar to those of the embodiment 1 and will not be repeated herein.

### Electrochemical performance test:

The cathodes of the lithium-sulfur battery prepared in the embodiment 1 to the embodiment 7 were respectively cut into a wafer having a diameter of 12 mm; and in an argon-atmosphere glove box, with a lithium metal foil as a anode, a 1 mol·L⁻¹ lithium bis(trifluoromethanesulphonyl) imide solution (the solvent was 1,3-dioxolane and ethylene glycol dimethyl ether at a volume ratio of 1:1, lithium nitrate was added to the solvent, and the mass fraction of lithium nitrate in the solvent was 1%) as an electrolyte, and a Celegard2400 type polypropylene film as a separator, the wafer was assembled into a 2032 type coin battery. The coin batteries prepared in the embodiments 1-7 were subjected to an electrochemical performance test.

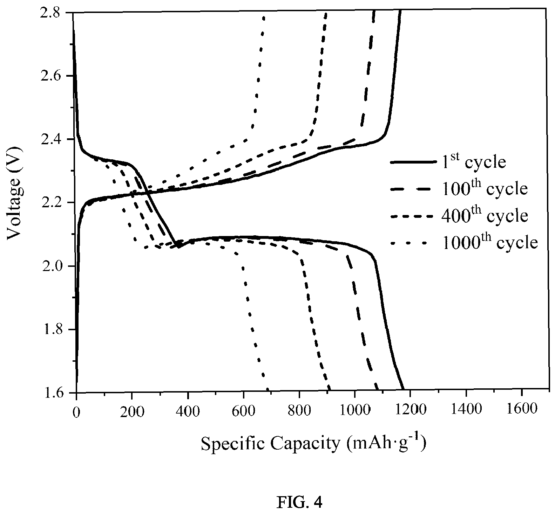

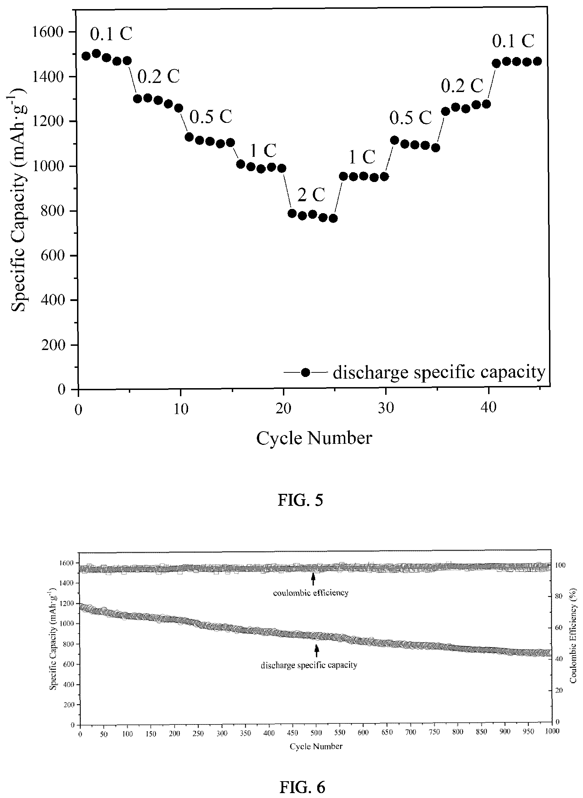

The coin battery prepared in the embodiment 1 was subjected to a galvanostatic charge-discharge test, the galvanostatic charge-discharge test was carried out on a Land-CT2001A type tester of Wuhan Land Company, and a test voltage window was 1.6 V-2.8 V; and by charging and discharging at a 0.5 C current density, the test results are shown in FIG. 4 and FIG. 5. FIG. 4 is a galvanostatic charge-discharge curve graph at a 0.5 C current density. FIG. 5 is a rate performance graph of a lithium-sulfur battery cathode at different current densities. As can be seen from FIG. 4, the initial capacity of the lithium-sulfur battery at the 0.5 C current density is 1175.2 mAh·g⁻¹, the capacity after 100 cycles is 1081.6 mAh·g⁻¹, the capacity after 400 cycles is 910.0 mAh·g⁻¹, the capacity after 500 cycles is 862.8 mAh·g⁻¹, the capacity after 1000 cycles is 689.2 mAh·g⁻¹, the retention rate of the 1000^{th}-cycle discharge capacity reaches to 58.64%, and the attenuation rate for each cycle is 0.04%. As can be seen from FIG. 5, the capacity at the 0.1 C current density is 1508.1 mAh·g⁻¹, the capacity at the 0.2 C current density is 1313.9 mAh·g⁻¹, the capacity at the 0.5 C current density is 1129.2 mAh·g⁻¹, the capacity at the 1 C current density is 1010.8 mAh·g⁻¹, and the capacity at the 2 C current density is 795.5 mAh·g⁻¹. When the current density recovers gradually, the capacity is maintained at a previous level basically: 957.1 mAh·g⁻¹ (1 C), 1097.2 mAh·g⁻¹ (2 C), 1236.3 mAh·g⁻¹ (0.2 C) and1455.7 mAh·g⁻¹ (0.1 C).

With a test on cycle performance and coulombic efficiency of the coin battery, obtained in the embodiment 1, at the 0.5 C current density, the results are shown in FIG. 6. As can be seen from FIG. 6, with 500 cycles, the mean value of the coulombic efficiency is 99.44%, the standard deviation is 0.6472%, and the standard deviation with 100% is 0.8573%; and with 1000 cycles, the mean value of the coulombic efficiency is 99.4%, the standard deviation is 0.7034%, and the standard deviation with 100% is 0.9407%.

The calculation formula of the standard deviation is: $σ = \sqrt{\frac{{\sum }_{i = 1}^{N} {\left({x}_{i}-\overline{x}\right)}^{2}}{N}}$ where the σ is a standard deviation of the coulombic efficiency and indicates a degree of dispersion of a mean value of the coulombic efficiency, and the larger the value is, the more dispersed it is, indicating that the coulombic efficiency of the lithium-sulfur battery is more unstable; the N is a total number of test cycles; the xᵢ is the coulombic efficiency in each cycle; and the *x̅* is the mean value of the coulombic efficiency.

The calculation formula of the standard deviation with the 100% is: ${σ}_{100} = \sqrt{\frac{{\sum }_{i = 1}^{N} {\left({x}_{i}-100\right)}^{2}}{N}}$ where the σ₁₀₀ is a standard deviation between the coulombic efficiency and the 100% and indicates a degree of dispersion with the 100%, and the larger the value is, the more dispersed it is, indicating that the discharge capacity and the charge capacity of the lithium-sulfur battery are more unequal; the N is a total number of test cycles; and the xᵢ is the coulombic efficiency in each cycle.

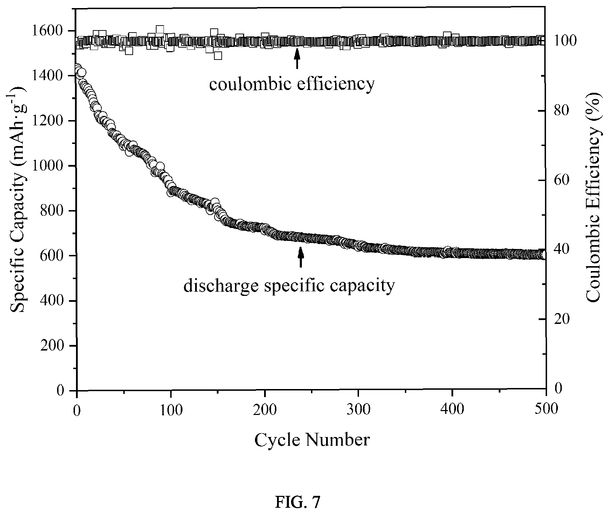

With the galvanostatic charge-discharge test on the coin battery prepared in the embodiment 2, the test method is the same as that of the embodiment 1 and the results are shown in FIG. 7. As can be seen from FIG. 7, the initial capacity at the 0.5 C current density is 1436.1 mAh·g⁻¹; after 500 cycles, the capacity is 594.2 mAh·g⁻¹, the retention rate of the discharge capacity is up to 41.38%, and the attenuation rate for each cycle is 0.12%; and with 500 cycles, the mean value of the coulombic efficiency is 100.15%, the standard deviation is 0.5044%, and the standard deviation with 100% is 0.5267%.

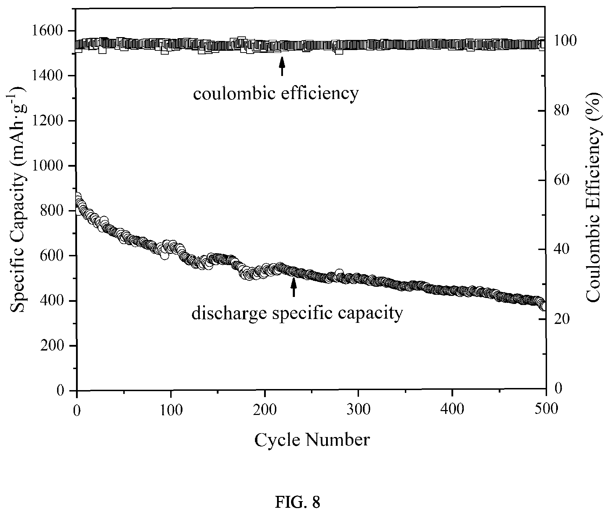

With the galvanostatic charge-discharge test on the coin battery prepared in the embodiment 3, the test method is the same as that of the embodiment 1 and the results are shown in FIG. 8. As can be seen from FIG. 8, the initial capacity at the 0.5 C current density is 862.6 mAh·g⁻¹; after 500 cycles, the capacity is 365.5 mAh·g⁻¹, the retention rate of the discharge capacity is up to 42.37%, and the attenuation rate for each cycle is 0.11%; and with 500 cycles, the mean value of the coulombic efficiency is 99.17%, the standard deviation is 0.4282%, and the standard deviation with 100% is 0.9300%.

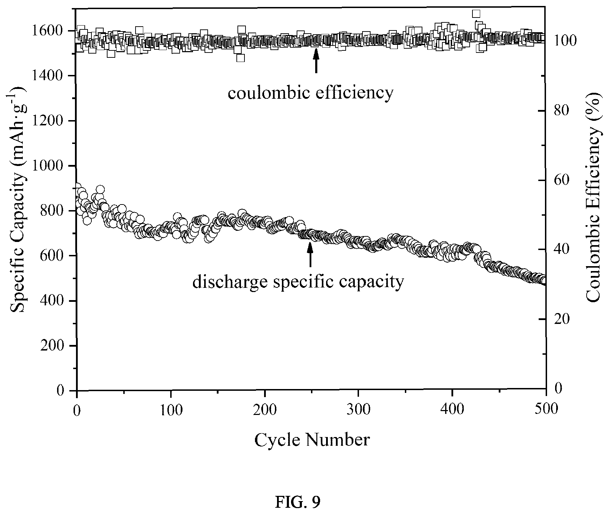

With the galvanostatic charge-discharge test on the coin battery prepared in the embodiment 4, the test method is the same as that of the embodiment 1 and the results are shown in FIG. 9. As can be seen from FIG. 9, the initial capacity at the 0.5 C current density is 905.2 mAh·g⁻¹; after 500 cycles, the capacity is 476.1 mAh·g⁻¹, the retention rate of the discharge capacity is up to 52.59%, and the attenuation rate for each cycle is 0.09%; and with 500 cycles, the mean value of the coulombic efficiency is 100.53%, the standard deviation is 1.0879%, and the standard deviation with 100% is 1.2098%.

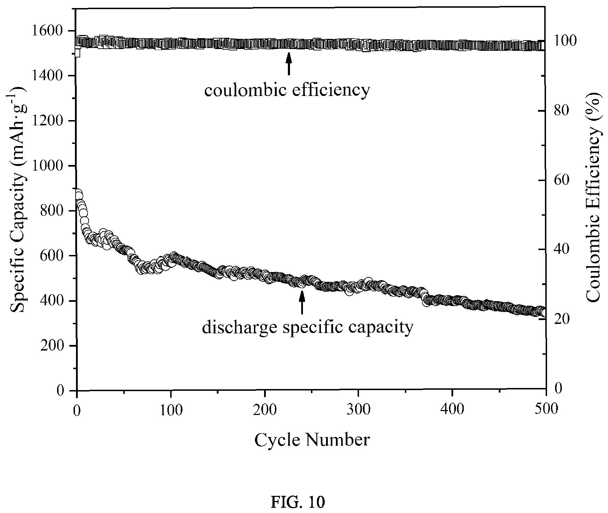

With the galvanostatic charge-discharge test on the coin battery prepared in the embodiment 5, the test method is the same as that of the embodiment 1 and the results are shown in FIG. 10. As can be seen from FIG. 10, the initial capacity at the 0.5 C current density is 868.5 mAh·g⁻¹; after 500 cycles, the capacity is 337.4 mAh·g⁻¹, the retention rate of the discharge capacity is up to 38.84%, and the attenuation rate for each cycle is 0.12%; and with 500 cycles, the mean value of the coulombic efficiency is 99.30%, the standard deviation is 0.5568%, and the standard deviation with 100% is 0.8964%.

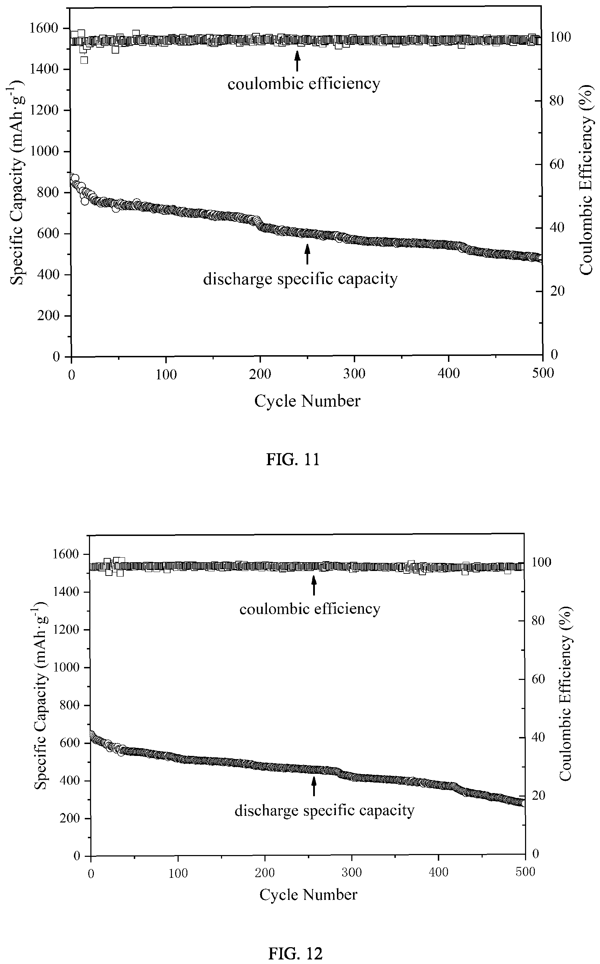

With the galvanostatic charge-discharge test on the coin battery prepared in the embodiment 6, the test method is the same as that of the embodiment 1 and the results are shown in FIG. 11. As can be seen from FIG. 11, the initial capacity at the 0.5 C current density is 876.4 mAh·g⁻¹; after 500 cycles, the capacity is 468.6 mAh·g⁻¹, the retention rate of the discharge capacity is up to 55.52%, and the attenuation rate for each cycle is 0.09%; and with 500 cycles, the mean value of the coulombic efficiency is 99.41%, the standard deviation is 0.5290%, and the standard deviation with 100% is 0.7859%.

With the galvanostatic charge-discharge test on the coin battery prepared in the embodiment 7, the test method is the same as that of the embodiment 1 and the results are shown in FIG. 12. As can be seen from FIG. 12, the initial capacity at the 0.5 C current density is 648.0 mAh·g⁻¹; after 500 cycles, the capacity is 268.6 mAh·g⁻¹, the retention rate of the discharge capacity is up to 41.45%, and the attenuation rate for each cycle is 0.12%; and with 500 cycles, the mean value of the coulombic efficiency is 98.96%, the standard deviation is 0.4987%, and the standard deviation with 100% is 1.1534%.

To sum up, the lithium-sulfur battery cathode provided by the present invention has high specific capacity, excellent cycle performance and high coulombic efficiency. The initial capacity of a coin battery assembled by the lithium-sulfur battery cathode provided by the present invention at a 0.5 C current density is 648.0-1436.1 mAh·g⁻¹; after 500 cycles, the capacity is 268.6-862.8 mAh·g⁻¹, the discharge retention rate is up to 38.84%-73.42%, and the attenuation rate for each cycle is 0.04%-0.12%; and with 500 cycles, the mean value of the coulombic efficiency is 98.96%-100.53%, the standard deviation is 0.4282%-1.0879%, and the standard deviation with 100% is 0.5267%-1.2098%.

The foregoing descriptions are only preferred implementation manners of the present invention. It should be noted that for a person of ordinary skill in the art, several improvements and modifications may further be made without departing from the principle of the present invention. These improvements and modifications should also be deemed as falling within the protection scope of the present invention.

## Claims

1. A lithium-sulfur battery cathode material, comprising MXene and functional carbon cloth, wherein the MXene is attached to a fiber surface of the functional carbon cloth, the MXene comprises metal carbide or metal nitride, and metal components in the metal carbide and the metal nitride independently comprise titanium, vanadium, chromium or molybdenum; and the surface of the functional carbon cloth contains hydroxyl and carboxyl functional groups.

2. The lithium-sulfur battery cathode material according to claim 1, wherein the MXene comprises Ti₃C₂, Ti₂C, Ti₂N, Cr₂C, V₂N or Mo₃C₂.

3. The lithium-sulfur battery cathode material according to claim 1, wherein the mass ratio of the MXene to the functional carbon cloth is 0.01-0.1:1.

4. A method for preparing the lithium-sulfur battery cathode material according to any one of claims 1 to 3, comprising the following steps:
(1) soaking carbon cloth into concentrated nitric acid to obtain functional carbon cloth;
(2) mixing MXene with water to obtain a suspension; and
(3) immersing the functional carbon cloth into the suspension, standing, and then subjecting to vacuum drying to obtain the lithium-sulfur battery cathode material, wherein
the step (1) and the step (2) have no order of priority.

5. The preparation method according to claim 4, wherein a method for preparing the MXene in the step (2) comprises:
(a) corroding a ternary layered ceramic material MAX by using hydrofluoric acid to obtain a binary layered ceramic material, wherein the M in the ternary layered ceramic material MAX represents metal titanium, vanadium, chromium or molybdenum, the A represents silicon or aluminum, and the X represents carbon or nitrogen;
(b) ultrasonically stripping the binary layered ceramic material by using dimethyl sulfoxide, centrifuging, and collecting a solid; and
(c) ultrasonically mixing the solid collected in the step (b) with deionized water and drying to obtain the MXene.

6. The preparation method according to claim 4, wherein the concentration of the suspension in the step (2) is 0.1-10 mg·mL⁻¹.

7. The preparation method according to claim 4, wherein the temperature for the vacuum drying in the step (3) is 40-100°C and the time is 5-24 h.

8. A lithium-sulfur battery cathode, wherein an active material of the lithium-sulfur battery cathode is the lithium-sulfur battery cathode material according to any one of claims 1 to 3 or a lithium-sulfur battery cathode material prepared with the method according to any one of claims 4 to 7.

9. A method for preparing the lithium-sulfur battery cathode according to claim 8, comprising the following steps:
(i) mixing polyvinylidene fluoride, sublimed sulfur and acetylene black with N-methylpyrrolidone to obtain a mixed slurry; and
(ii) immersing a lithium-sulfur battery cathode material into the mixed slurry obtained in the step (i), and then subjecting to vacuum drying to obtain the lithium-sulfur battery cathode, wherein the lithium-sulfur battery cathode material is the lithium-sulfur battery cathode material according to any one of claims 1 to 3 or a lithium-sulfur battery cathode material prepared with the method according to any one of claims 4 to 7.

10. A lithium-sulfur battery, wherein a lithium-sulfur battery cathode is the lithium-sulfur battery cathode according to claim 8 or a lithium-sulfur battery cathode prepared with the method according to claim 9.
